# DEMANDE DE BREVET EUROPEEN

(11) **EP 4 137 946 A1**
(43) Date de publication de la demande: **22.02.2023**
(21) Numéro de dépôt: 21192194.5
(22) Date de dépôt: 19.08.2021
(51) Int. Cl.: G06F 11/30, G06F 11/34, G06F 11/36, G06F 8/77

(54) **PROCÉDÉ DE REPRÉSENTATION D'UN SYSTÈME INFORMATIQUE DISTRIBUÉ PAR PLONGEMENT DE GRAPHE**

(71) Demandeur: Bull SAS, 78340 Les Clayes-sous-Bois (FR)
(72) Inventeur: DYNOMANT, Emeric, 38100 Grenoble (FR); SEROUL, Pierre, 38650 Sinard (FR)
(74) Mandataire: Cabinet Camus Lebkiri

(57) **Abrégé**

L'invention concerne un procédé de représentation d'un système informatique distribué, le système informatique distribué comprenant une pluralité de dispositifs de traitement reliés entre eux selon une topologie prédéfinie, le procédé comprenant au moins les étapes de :
- Réception d'au moins une donnée d'un fichier de journalisation d'activité relative à au moins un dispositif de traitement de la pluralité de dispositifs de traitement,
- Réception d'au moins une métrique relative à au moins un dispositif de traitement de la pluralité de dispositifs de traitement,
- Réception d'au moins la topologie prédéfinie du système informatique distribué,
- Construction d'un graphe représentatif d'un fonctionnement du système informatique distribué, le graphe comprenant la donnée extraite du fichier de journalisation reçue, la métrique reçue, et la topologie reçue,
- Plongement d'au moins une partie du graphe pour obtenir au moins un vecteur d'état représentant la au moins une partie du graphe plongée.

## Description

### DOMAINE TECHNIQUE DE L'INVENTION

Le domaine technique de l'invention est celui des systèmes informatiques distribués.

La présente invention concerne un procédé de représentation d'un système informatique distribué, un procédé de maintenance basé sur cette représentation, et un dispositif de représentation associé et en particulier un procédé de représentation dans lequel le système informatique distribué est représenté par un graphe et dans lequel un plongement du graphe permet d'obtenir un vecteur d'état du système, le vecteur d'état pouvant alors être présenté en entrée d'un procédé de maintenance du système informatique distribué.

### ARRIERE-PLAN TECHNOLOGIQUE DE L'INVENTION

Dans toute la description, on entendra par système informatique distribué un système informatique complexe comprenant plusieurs machines permettant de répartir des travaux entre les différentes machines, et permettant notamment la parallélisation de sous-tâches connexes d'un service donné. On parlera dans toute la description indifféremment de machine, de nœud de calcul, de lame de calcul ou de dispositif de traitement. Par exemple, les parcs de serveurs d'entreprises ainsi que les calculateurs hautes performances aussi appelés HPC, pour « High-Performance Computer », sont des systèmes informatiques distribués. Ces systèmes informatiques distribués, aussi appelés clusters de calcul, peuvent comprendre des milliers de machines.

Les incidents sur ce type d'équipement sont très préjudiciables pour les utilisateurs finaux : redémarrage lent et compliqué, consommation accrue d'énergie, perte de services, etc. et la prédiction et/ou la détection de ces incidents permet à l'équipe d'administration d'anticiper ou d'améliorer la résolution de ces problèmes, améliorant ainsi la qualité de service pour les utilisateurs finaux.

On connait des solutions comme CDC pour « Cognitive Data Center » (pour « Centre de Données Cognitif » en français). Cette solution particulière est décrite sur le site dont l'url est https://atos.net/fr/solutions/codex-ai-suite. Une telle solution permet la mise en place de pipelines de détection et/ou prédiction d'incidents sur ce type d'équipement. En utilisant des métriques systèmes (utilisation du processeur, de la mémoire vivre, des lectures et/ou écritures disque, consommation énergétique, etc.) ou des logs (systèmes, applicatifs, etc.), les anomalies peuvent être détectées en temps réel et remontées aux administrateurs.

En informatique, un log correspond à une journalisation d'activité d'un processus. Ce log, ou journal, est créé par un enregistrement séquentiel dans un fichier ou une base de données de tout ou d'une partie de l'activité du processus. Un log ou journal désigne le fichier où sont enregistrés ces enregistrements. Ces enregistrements sont datés. Pour un fichier de log donné, différentes lignes peuvent avoir différentes sémantiques. Dans la pratique on utilise le terme log pour désigner un fichier de logs, un journal de logs ou une ligne de log. Une ligne de log est une ligne d'un fichier/journal de logs.

Le caractère exclusif des sources d'information que sont les métriques et les logs est problématique. En effet, les logs et les métriques ne sont que les deux faces d'une même pièce : lorsque le disque dur d'une machine approche de la saturation, la métrique indiquant un espace disque utilisé à 99%, tout comme le log indiquant que l'on approche de la saturation sont équivalent en termes d'information. Cependant, l'un comme l'autre a ses avantages :
- Les métriques reflètent une réalité physique, mesurable, avec des unités
- Les logs peuvent refléter l'état du programme lui-même, du point de vue du développeur ayant défini ces logs

Il parait donc problématique que les projets de détection d'anomalies sur systèmes informatiques complexes tels que CDC ne se focalisent toujours que sur un seul type de données.

Par exemple, Dynatrace^{®} est un logiciel de surveillance d'un parc de serveurs. Il est initialement conçu pour être utilisé dans les environnements cloud. Cependant, son utilisation pour des serveurs physiques reste encore majoritaire pour des utilisations impliquant des données sensibles, ou lorsque la préservation de la gouvernance des données est un point sensible. Dans cette solution, les métriques systèmes sont utilisées pour détecter des anomalies sur les machines, mais les logs sont consommés uniquement dans le but d'être mis en corrélation avec une modification des métriques systèmes afin d'aider à trouver la cause racine du problème [Anomaly Détection For Monitoring, 2015, Schwartz et al, Dynatrace, O'Reilly]. Ainsi, les logs ne sont pas utilisés à proprement parler comme données d'entrée des modèles d'apprentissage machine pour la détection d'anomalies, et ne sont donc pas pris en compte pour la détection d'anomalies de la même façon que les métriques systèmes.

De plus, dans Dynatrace^{®}, la structuration des logs, par exemple pour en extraire des valeurs numériques afin de constituer une série temporelle, est faite suivant un schéma de log défini par l'utilisateur. Pour des machines ne faisant tourner qu'un unique service, par exemple, un serveur web Apache, le format des logs écrits va être connu par avance. Or, les utilisateurs de HPC mettent souvent en œuvre des tâches de recherche scientifique, avec des programmes développés spécifiquement, avec des logs ayant un format différent entre deux applications, ou même entre deux versions de la même application.

New Relic^{®} est une autre solution commercialisée. De même que Dynatrace^{®}, celle-ci utilise les logs uniquement dans un but de mise en parallèle avec des métriques systèmes. Toujours afin de fournir une recherche pseudo-automatique de la cause racine de la modification de la tendance de ces indicateurs. Cette utilisation est expliquée dans la documentation de la solution.

Une autre solution, Datadog^{®}, n'utilise, comme ses concurrents, que les métriques systèmes dans ses prédictions d'incidents. Cependant, sa solution de traitement et de visualisation des journaux est plus complète que celles présentées jusqu'ici. Bien que basée sur une structuration par modèles d'applications prédéfinies, la structuration des lignes de journalisation associe également un motif à chacun des logs. Ainsi, une ligne indiquant un changement de température dans un processeur pourra être associé au modèle « <COMPOSANT> température passée de <VALEUR> à <VALEUR><UNITE> ». Cette fonctionnalité permet de mieux grouper les informations et une navigation facilitée dans les journaux, mais ne permet pas la prise en compte de métrique dans la prédiction d'incidents.

Aucune de ces solutions ne parle, de plus, de prendre en compte la topologie réseau dans leur solution. Or, cette source de données pourrait avoir beaucoup d'intérêt dans la détection d'anomalies qui se propagent de proche en proche.

Il existe donc un besoin d'avoir une solution permettant la prise en compte simultanée des logs, des métriques et de la topologie, tout en ayant de bons résultats de détection et/ou prévision d'anomalies.

### RESUME DE L'INVENTION

L'invention offre une solution aux problèmes évoqués précédemment, en permettant de prendre en compte des données hétérogènes et notamment les logs, les métriques et la topologie dans un procédé de maintenance, grâce à la construction d'un graphe et son plongement pour obtenir un vecteur d'état.

Un aspect de l'invention concerne un procédé de représentation d'un système informatique distribué, le système informatique distribué comprenant une pluralité de dispositifs de traitement reliés entre eux selon une topologie prédéfinie, le procédé comprenant au moins les étapes de :
- Réception d'au moins une donnée d'un fichier de journalisation d'activité relative à au moins un dispositif de traitement de la pluralité de dispositifs de traitement,
- Réception d'au moins une métrique relative à au moins un dispositif de traitement de la pluralité de dispositifs de traitement,
- Réception d'au moins la topologie prédéfinie du système informatique distribué,
- Construction d'un graphe représentatif d'un fonctionnement du système informatique distribué, le graphe comprenant la donnée extraite du fichier de journalisation reçue, la métrique reçue, et la topologie reçue,
- Plongement d'au moins une partie du graphe pour obtenir au moins un vecteur d'état représentant la au moins une partie du graphe plongée.

Grâce à l'invention, il est possible de représenter au mieux le fonctionnement d'un système informatique distribué par la construction d'un graphe. Cela permet de prendre en compte plus d'informations que dans l'état de l'art, et notamment de prendre en compte la topologie du système informatique distribué. Le plongement du graphe dans un espace permet l'obtention d'un vecteur d'état représentatif du fonctionnement d'au moins une partie du système informatique distribué pendant une certaine durée. Ce vecteur d'état peut alors être utilisé dans toute méthode de maintenance acceptant en entrée un vecteur, et de manière préférentielle dans l'invention toute méthode de maintenance basée sur un apprentissage automatique. Ainsi, il est possible de réaliser l'apprentissage avec un vecteur plus représentatif d'au moins un sous-ensemble du système informatique distribué que l'état de l'art car ce vecteur prend en compte la topologie, les métriques et les logs,

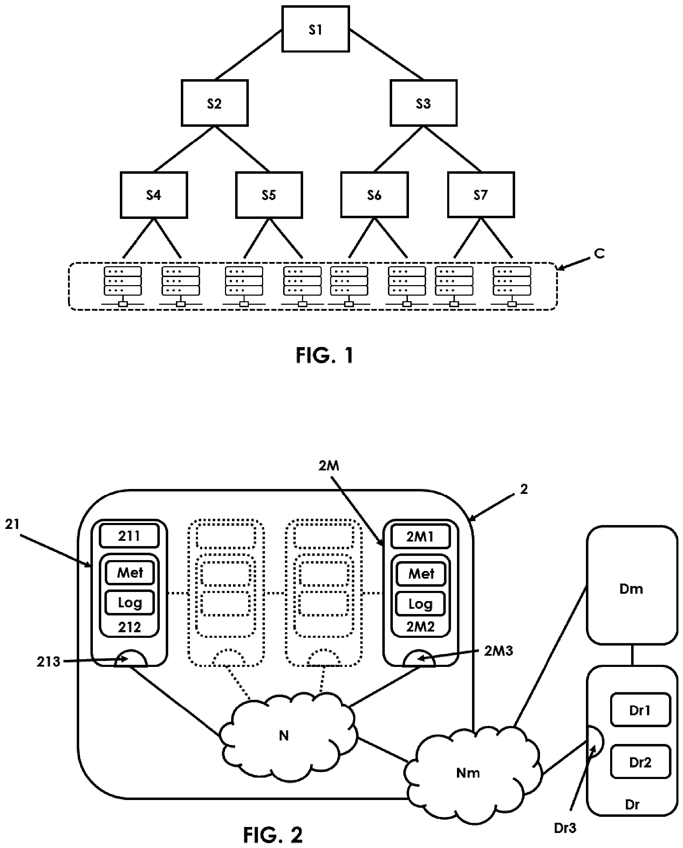

L'invention utilise le fait que l'agencement des nœuds de calcul des HPC via un réseau génère une forme d'arbre, avec des niveaux successifs de commutateurs réseau S (aussi appelés « switchs ») jusqu'aux unités de calcul élémentaires C en bout de branches, comme représenté à la figure 1. Cela permet une construction d'un graphe basé sur la topologie, et prenant aussi en compte les métriques et les logs relatifs à chacun des dispositifs du système.

L'invention permet aussi de ne représenter qu'une partie du système informatique distribué, et d'en capturer ce qui est important grâce au plongement du graphe dans un espace latent, c'est-à-dire dans un espace de dimension diminuée, pour obtenir un vecteur d'état représentatif de la partie du système informatique distribué et de son fonctionnement. L'invention peut donc isoler des parties du système pour les analyser indépendamment, tout en prenant en compte dans cette analyse l'ensemble des informations hétérogènes reçues relatives à cette partie du système.

L'invention permet ainsi d'améliorer les résultats de procédés de maintenance connus prenant en entrée des vecteurs d'état en travaillant sur le vecteur d'état fourni pour qu'il représente au mieux le système informatique distribué maintenu.

Outre les caractéristiques qui viennent d'être évoquées dans le paragraphe précédent, le procédé de représentation selon un aspect de l'invention peut présenter une ou plusieurs caractéristiques complémentaires parmi les suivantes, considérées individuellement ou selon toutes les combinaisons techniquement possibles :
- les étapes de réception sont mises en œuvre une pluralité de fois, chaque mise en œuvre étant réalisée pendant une fenêtre de temps de durée prédéterminée, les étapes de constructions de graphe, de plongement du graphe étant réalisées à la fin de chaque fenêtre de temps,
- le graphe créé comprend :
   - des nœuds représentant des utilisateurs, des dispositifs de traitement, des activités et/ou des fichiers de journalisation,
   - des arrêtes reliant les nœuds, les arrêtes représentant les liens entre nœuds et étant basées au moins en partie sur la topologie,
   - des attributs de nœuds et/ou d'arrêtes représentant les métriques reçues,
- la topologie reçue est envoyée par un orchestrateur,
- le plongement d'au moins une partie du graphe est réalisé par un procédé de plongement de graphe choisi parmi DyGCN et MAGNN,

Un autre aspect de l'invention concerne un procédé de maintenance d'un système informatique distribué, le système informatique distribué comprenant une pluralité de dispositifs de traitement reliés entre eux selon une topologie prédéfinie, le procédé comprenant au moins les étapes du procédé de représentation selon l'invention et en outre une étape de maintenance du système informatique distribué par un procédé d'apprentissage automatique à partir du vecteur d'état. Dans une variante, l'étape de maintenance du système informatique distribué est réalisée à partir d'une pluralité de vecteurs d'état respectivement obtenus pendant chaque fenêtre de temps de la pluralité de fenêtres de temps. Le procédé d'apprentissage automatique de maintenance peut en outre être est au moins un procédé parmi :
- un procédé de détection d'anomalie,
- un procédé de prédiction d'incident,
- un procédé d'analyse cause racine.

Un autre aspect de l'invention concerne un dispositif de représentation d'un système informatique distribué, le système informatique distribué comprenant une pluralité de dispositifs de traitement reliés entre eux selon une topologie prédéfinie, le dispositif de représentation comprenant :
- Au moins un module de réception, configuré pour mettre en œuvre les étapes de réception du procédé de représentation selon l'invention,
- Au moins un module de création de graphe, configuré pour mettre en œuvre l'étape de création de graphe du procédé de représentation selon l'invention,
- Au moins un module de plongement de graphe, configuré pour mettre en œuvre l'étape de plongement de graphe du procédé de représentation selon l'invention.

Dans une variante, le dispositif de représentation comprend en outre un module de stockage configuré pour stocker le au moins un vecteur d'état issu de l'étape de plongement de graphe, le module de plongement de graphe étant en outre configuré pour envoyer le vecteur d'état au module de stockage.

Encore un autre aspect de l'invention concerne un produit-programme d'ordinateur comprenant des instructions qui, lorsque le programme est exécuté par un ordinateur, conduisent celui-ci à mettre en œuvre les étapes du procédé de représentation selon l'invention ou les étapes du procédé de maintenance selon l'invention.

Encore un autre aspect de l'invention concerne un support d'enregistrement lisible par ordinateur comprenant des instructions qui, lorsqu'elles sont exécutées par un ordinateur, conduisent celui-ci à mettre en œuvre les étapes du procédé de représentation selon l'invention ou les étapes du procédé de maintenance selon l'invention.

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.
- La figure 1 montre une représentation schématique d'un système informatique distribué de l'état de l'art,
- La figure 2 montre une représentation schématique d'un système informatique distribué, d'un dispositif de représentation selon l'invention et d'un dispositif de maintenance,
- La figure 3 montre une représentation schématique d'un procédé de représentation selon l'invention,
- La Figure 4 montre une représentation schématique d'un graphe construit selon l'invention représentant un système informatique distribué.

### DESCRIPTION DETAILLEE

Sauf précision contraire, un même élément apparaissant sur des figures différentes présente une référence unique.

La figure 2 montre une représentation schématique d'un système informatique distribué, d'un dispositif de représentation selon l'invention et d'un dispositif de maintenance,

Le système informatique distribué 2 représenté à la Figure 2 est le système informatique distribué qui est l'objet de la maintenance par un dispositif de maintenance Dm. Le système 2 et le dispositif Dm sont reliés par un réseau de maintenance Nm.

Le système informatique distribué 2 comprend M dispositifs de traitement 21 à 2M. On entend par « dispositif de traitement » un dispositif configuré pour réaliser des tâches qui lui sont attribuées. Par exemple, une lame de calcul dans une armoire informatique est un dispositif de traitement. Une armoire informatique entière est aussi un dispositif de traitement. Au sein d'un système informatique distribué, un serveur, une machine, un nœud, une machine virtuelle, un conteneur « pod » par exemple déployé par une solution de type « Kubernetes », un commutateur réseau ou une lame sont par exemple des dispositifs de traitement.

L'invention est préférentiellement mise en œuvre avec plusieurs centaines ou milliers de dispositifs de traitement 21 à 2M, mais peut aussi être mise en œuvre à partir de deux dispositifs de traitement 21 et 2M, avec M égal à 2. Ces dispositifs de traitement 21 à 2M sont reliés par un réseau d'interconnexion N.

Au moins deux dispositifs de traitement parmi les dispositifs de traitement 21 à 2M, et préférentiellement tous les dispositifs de traitement 21 à 2M, comprennent au moins :
- Un module de traitement 211, 2M1, configuré pour mettre en œuvre des instructions. Par exemple, ce module de traitement comprend un processeur, un microcontrôleur, ou toute autre carte électronique permettant de mettre en œuvre des instructions reçues,
- Un module de stockage 212, 2M2, configuré pour stocker des données. Le module de stockage peut être ou comprendre : un disque dur, un disque SSD (Solid-State Drive), ou tout autre moyen de stockage. Les modules de stockage 212, 2M2 sont représentés de manière unifiée mais il peut s'agir de plusieurs unités logiques réparties sur plusieurs dispositifs physiques auxquels les dispositifs de traitement 21 à 2M ont accès via le réseau d'interconnexion N,
- Un module réseau 213, 2M3, configuré pour envoyer et recevoir des données via le réseau d'interconnexion N. Ce module réseau est ou comprend une interface réseau, préférentiellement filaire, par exemple de type « Ethernet^{®} » ou « InfinityBand^{®} », ou sans-fil, par exemple de type « Wi-Fi^{®} ».

Le module de stockage 212, 2M2 des dispositifs de traitement 21, 2M est configuré pour stocker au moins une métrique Met et au moins une donnée d'un fichier de journalisation d'activité Log. Les expressions « log », « fichier de journalisation », « journal » ou encore « fichier journal » font toutes référence au même objet, décrit par la suite.

Il convient de faire une différence entre fichier de journalisation et métrique.

Une métrique est un indicateur de l'état d'un dispositif de traitement et/ou d'un de ses composants matériel ou logiciel. Cette métrique peut être déclinée par processus, par exemple le nombre d'accès disque pour le processus dont le pid (« process identifier » pour « identifiant de processus ») est 12584. Une métrique, ou information de type métrique, associe donc une date et une valeur, l'interprétation de la valeur étant faite par la nature de la métrique.

A contrario, une ligne d'un fichier journal, ou information de type log, est, par exemple :
2018-07-11 13:20:56 192.168.1.150 GET /favicon.ico - 80 - 192.168.1.106 Mozilla/5.0+(Windows+NT+10.0;+Win64;+x64;+rv:61.0)+Gecko/20100101+Firefox/6 1.0 - 200 0 0 15.

Dans cette ligne, les informations sont séparées par des espaces. Cette ligne indique, entre autres, à quelle date et heure, et avec quelle méthode, a été demandé un fichier nommé favicon.ico. Cette ligne indique aussi que la réponse a été émise en 15ms. Une telle ligne est donc beaucoup plus riche qu'une simple métrique. Il existe de nombreux journaux d'activité avec des degrés de verbosité divers et avec des informations variées. Ces informations sont parfois laissées à l'imagination des développeurs.

L'invention permet de traiter les deux types d'information dans sa détection d'anomalie, tout en prenant en compte la topologie du système informatique distribué 2.

A la figure 2 sont aussi représentés un dispositif Dr de représentation du système informatique distribué 2 et un dispositif Dm de maintenance du système informatique distribué 2. Bien que la Figure 2 montre ces deux dispositifs, l'invention couvre aussi les cas où la représentation du système 2 et sa maintenance sont réalisés par le même dispositif.

Le dispositif Dr de représentation selon l'invention permet de préparer les données, qui seront passées en entrée d'un procédé de maintenance, pour prendre en compte des données hétérogènes provenant du système informatique distribué 2. Le dispositif de maintenance Dm, lorsqu'il n'est pas confondu avec le dispositif de représentation Dr, est alors chargé de mettre en œuvre la maintenance du système informatique distribué 2.

Le dispositif Dr de représentation sera présenté plus en détail plus loin dans la description.

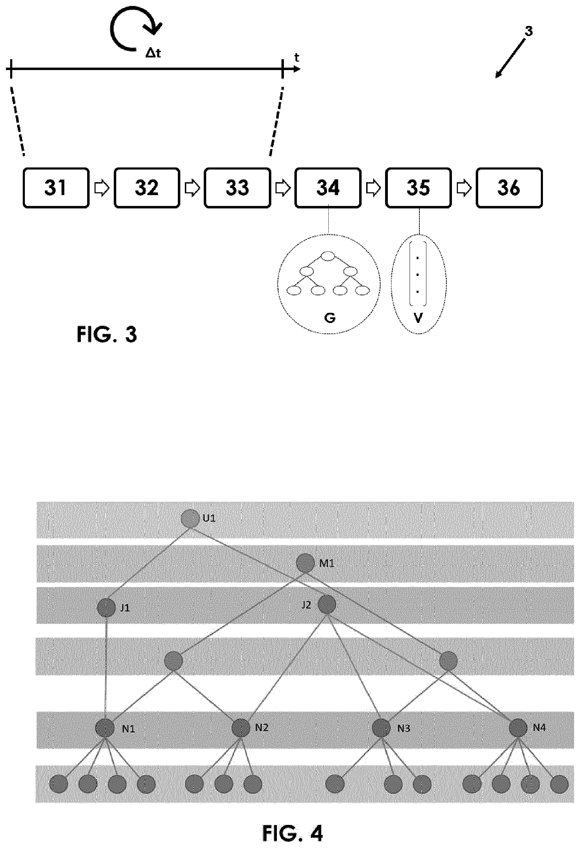

La Figure 3 montre une représentation schématique du procédé de représentation 3 selon l'invention.

Le procédé de représentation 3 représenté à la Figure 2 comprend 6 étapes, mais la dernière étape 36 est optionnelle. Ainsi, le procédé de représentation 3 selon l'invention comprend au moins 5 étapes. Ces 5 étapes sont réalisées par le dispositif Dr de représentation du système informatique distribué 2.

Le procédé de représentation 3 comprend trois étapes de réception de données, un type de données différent étant reçu à chacun des étapes. Ces étapes peuvent être confondues, c'est-à-dire que les trois types de données peuvent être reçues lors d'une même réception, ou deux types de données peuvent être reçus en même temps et un autre type de données peut être reçue plus tôt ou plus tard. Les trois étapes de réception peuvent être réalisées dans un autre ordre que l'ordre présenté ci-après.

La première étape de réception est l'étape 31 de réception d'au moins une donnée d'un fichier de journalisation d'activité relative à au moins un dispositif de traitement par les dispositifs de traitement 21 à 2M du système informatique distribué 2. Un exemple d'un fichier de journalisation d'activité du dispositif de traitement 21 sera pris. Le dispositif de traitement 21 stocke un fichier de journalisation Log ou au moins une donnée d'un fichier de journalisation d'activité dans son module de stockage 212. Le dispositif de traitement 21 peut ne stocker qu'une donnée d'un fichier de journalisation par exemple lorsque le fichier de journalisation d'activité est stocké par une base de données externe. L'invention couvre aussi les cas où les fichiers de journalisation sont envoyés par un système ou un dispositif centralisé, par exemple une base de données de logs dédiée, par exemple ElasticSearch^{®}, très utilisée dans l'art antérieur pour traiter les logs.

On entend par « une donnée d'un fichier de journalisation d'activité » par exemple une ligne d'un fichier de logs, plusieurs lignes d'un fichier de logs, ou le fichier de logs entier, ou encore une donnée représentative d'une ligne d'un fichier de logs ou du fichier de logs entier On entend par « une donnée représentative d'une ligne d'un fichier de logs ou du fichier de logs entier » toute donnée résultant d'une analyse d'un fichier log. On entend par « une donnée d'un fichier de journalisation d'activité relative à un dispositif de traitement 21 » le fait que la donnée du fichier de journalisation d'activité est représentative d'au moins une partie d'une activité menée avec ou par le dispositif de traitement 21. On entend par « activité » un travail ou une partie d'un travail mené avec ou par le dispositif de traitement 21, un travail étant par exemple une tâche ou une partie d'une tâche d'un service mis en œuvre par le système informatique distribué 2.

La donnée du fichier de journalisation d'activité Log, par exemple une ligne du fichier Log, est envoyée au dispositif de représentation Dr, via le module réseau 213, au moins via le réseau de maintenance Nm, à la suite d'une requête du dispositif de représentation Dr ou automatiquement périodiquement. Ainsi, à l'étape 31, qui peut ou non être confondue avec les étapes 32 et 33, le dispositif de représentation Dr reçoit au moins une donnée relative à un fichier de journalisation d'activité via son module réseau Dr3.

Le procédé de représentation 2 comprend les étapes de réception 32 et 33, qui sont réalisées de la même façon que l'étape 31.

L'étape 32 est une étape de réception d'au moins une métrique relative à au moins un dispositif de traitement parmi les dispositifs de traitement 21 à 2M du système informatique distribué 2. Une métrique relative à au moins un dispositif de traitement est une métrique indiquant l'état matériel ou logiciel du dispositif de traitement ou d'un ou plusieurs de ses composants, ou indiquant l'état matériel ou logiciel d'une tâche ou d'une partie d'une tâche dans laquelle le dispositif de traitement et impliqué. Les métriques sont souvent stockées dans une base de données temporelle, telle InfluxDB^{®}, de la suite TICK, utilisée dans le suivi des dispositifs de traitement. L'invention couvre ainsi aussi les cas où les métriques sont récupérées depuis de telles bases de données temporelles. Ainsi, à l'étape 32, qui peut ou non être confondue avec les étapes 31 et 33, le dispositif de représentation reçoit au moins une métrique via son module réseau Dr3.

L'étape 33 est une étape de réception une réception d'au moins une topologie prédéfinie du système informatique distribué. On entend par « topologie » un ensemble de données ou au mins une donnée représentant les liens entre les différentes entités du système informatique distribué. La topologie est intéressante dans la mesure où si un switch est défaillant, chaque nœud qu'il gère sera également défaillant, ce qui permet à l'invention de prendre en compte cette information, mais aussi dans la mesure où l'ordonnanceur des tâches maximise la proximité géographique des nœuds utilisés pour réaliser un job pour minimiser la latence, ce qui est une information importante à prendre en compte. La topologie réseau peut par exemple être récupérée auprès d'un orchestrateur (non représenté) du système informatique distribué 2, par exemple un orchestrateur HPC tel que Slurm^{®}. Il en va de même pour les parcs serveurs. Un connecteur logiciel à l'orchestrateur ou à l'équilibreur de charge (aussi appelé « load balancer » en anglais) peut être utilisé pour récupérer les données topologiques, sur requête ou automatiquement de manière périodique par exemple lorsque le contexte le nécessite. Ainsi, à l'étape 33, qui peut ou non être confondue avec les étapes 31 et 32, le dispositif de représentation reçoit la topologie réseau via son module réseau Dr3.

Une fois que les données des trois types sont reçues, le procédé de représentation 34 comprend une étape de construction d'un graphe représentatif d'un fonctionnement du système informatique distribué. Cette étape de construction de graphe prend ainsi en considération les données issues de fichiers de journalisation d'activité, des métriques, et de la topologie du système informatique distribué 2 reçues aux étapes 31 à 33. Le graphe construit comprend :
- des nœuds représentant des utilisateurs, des dispositifs de traitement, des activités et/ou des fichiers de journalisation,
- des arrêtes reliant les nœuds, les arrêtes représentant les liens entre nœuds et étant basées au moins en partie sur la topologie,
- des attributs de nœuds et/ou d'arrêtes représentant les métriques reçues.

Un tel graphe construit est représenté à la Figure 4. Comme montré à la Figure 4, l'utilisateur U1 a 2 « jobs » (« tâches ») qui tournent pendant la fenêtre temporelle d'acquisition. Le job J2 utilise 3 nœuds et le job J1 n'en utilise qu'un seul. Les nœuds N1 et N4 ont chacun écrit 4 logs durant la fenêtre temporelle d'acquisition. Les nœuds N2 et N3 en ont écrit 3. La Figure 4 ne représente pas les métriques (intégrées sous forme d'attributs de nœuds et/ou d'arrêtes au graphe construit).

On entend par « graphe représentatif d'un fonctionnement du système informatique distribué » un graphe comprenant un ensemble de données permettant de refléter les échanges et liens entre entités du système informatique distribué 2 pendant une période donnée.

Le procédé 2 selon l'invention comprend ensuite une étape 35 de plongement du graphe dans un espace latent, de dimension réduite, pour obtenir un vecteur d'état représentant le graphe. Cette étape 35 peut être réalisée sur une partie du graphe, permettant de ne représenter et de n'analyser que la partie du graphe en question. Le « plongement » de graphe, aussi appelé « graph embedding » en anglais, permet la représentation numérique vectorielle d'informations contenues dans un graphe. Il peut s'agir d'un nœud unique, d'une relation entre deux nœuds, ou même d'un sous-graphe extrait du graphe parent. L'invention utilise le plongement pour permettre une réduction de dimensionnalité tout en conservant les données nécessaires à la maintenance du système informatique distribué 2, tout cela en un format compris par les procédés de maintenance connus, préférentiellement par apprentissage automatique. En effet, ces procédés prennent en entrée un vecteur et l'invention permet de fournir ce vecteur, créé automatiquement et comprenant des informations hétérogènes : des informations numériques (métriques des dispositifs de traitement), textuelles (les logs écrits par chaque dispositif de traitement) et spatiales (la topologie réseau), permettant ainsi d'améliorer les procédés relatifs à la maintenance de ces systèmes sans modifier ces procédés eux-mêmes. Ces procédés, préférentiellement des procédés d'apprentissage automatique mais pas seulement, peuvent être :
- un procédé de détection d'anomalie,
- un procédé de prédiction d'incident,
- un procédé d'analyse cause racine (« RCA » pour « Root Cause Analysis »).

Des procédés de plongement de graphes connus peuvent être utilisés, par exemple DyGCN, décrit dans le document [Cui et al., DyGCN: Dynamic Graph Embedding with Graph Convolutional Network, 2021, doi : 10.1145/3366423.3380297] et MAGNN, décrit dans le document [Fu et al., MAGNN: Metapath Aggregated Graph Neural Network for Heterogeneous Graph Embedding, 2020, doi : 10.1145/1122445.1122456]. Ces deux procédés sont particulièrement en ce qu'ils peuvent être utilisés pour :
- prendre en compte, à la représentation du graphe N pendant un certain intervalle de temps, les états précédents aux intervalles de temps précédents de ce graphe N-1, N-2, ..., N-m. En effet, l'état du HPC à un instant t va dépendre de son état à t-1, t-2, ..., t-m et l'invention permet de prendre cette information en compte.
- pouvoir représenter un sous-graphe complet. Comme montré à la figure 4, un « job » est un sous-graphe de nœuds de calculs et leur logs associés, un utilisateur est un ensemble de jobs, et même un simple nœud de calcul est représenté par le sous-graphe de ce nœud et de ses logs, écrits pendant cette fenêtre temporelle. L'invention permet encore une fois de prendre en compte toutes ces informations dans la maintenance future du système informatique distribué 2.

Le procédé 2 selon l'invention est préférentiellement mis en œuvre une pluralité de fois, comme représenté à la Figure 2. Chaque mise en œuvre est réalisée pendant une fenêtre de temps de durée prédéterminée Δt, les étapes de constructions de graphe 34 et de plongement du graphe 35 étant réalisées à la fin de chaque fenêtre de temps pour la fenêtre de temps qui vient de s'écouler. Une fenêtre temporelle selon l'invention peut par exemple durer 5 minutes. Réaliser les étapes de réception et de construction de graphe et de plongement du graphe une pluralité de fois permet de prendre en compte les états précédents du graphe et donc du système informatique distribué 2, notamment lorsque la maintenance ultérieure est réalisée par apprentissage automatique.

Le procédé de représentation 3 peut comprendre optionnellement une étape supplémentaire 36 de stockage du vecteur d'état obtenu à la suite de l'étape 35 de plongement d'au moins une partie du graphe. Cela permet d'avoir à disposition un historique des vecteurs d'état à plusieurs instants par exemple pour réentraîner plus vite le modèle du procédé d'apprentissage automatique. Cela permet une interconnexion simple avec des procédés de maintenance utilisés par le dispositif de maintenance Dm.

L'invention concerne aussi un procédé de maintenance (non représenté) du système informatique distribué 2.

Ce procédé de maintenance comprend les étapes du procédé de représentation 3 selon l'invention et une étape supplémentaire de maintenance du système informatique distribué par un procédé d'apprentissage automatique à partir du vecteur d'état. Cette étape de maintenance peut être réalisée à partir d'une pluralité de vecteurs lorsque les étapes du procédé de représentation 2 ont été réalisées une pluralité de fois pendant la pluralité de fenêtres de temps.

Le procédé de maintenance peut être mis en œuvre par le dispositif de maintenance Dm ou par un dispositif unique non représenté réalisant et la représentation du système informatique distribué 2 et sa maintenance.

## Revendications

1. Procédé de représentation d'un système informatique distribué, le système informatique distribué comprenant une pluralité de dispositifs de traitement reliés entre eux selon une topologie réseau prédéfinie, le procédé comprenant au moins les étapes de :
- Réception d'au moins une donnée d'un fichier de journalisation d'activité relative à au moins un dispositif de traitement de la pluralité de dispositifs de traitement,
- Réception d'au moins une métrique relative à au moins un dispositif de traitement de la pluralité de dispositifs de traitement,
- Réception d'au moins la topologie prédéfinie du système informatique distribué,
- Construction d'un graphe représentatif d'un fonctionnement du système informatique distribué, le graphe comprenant la donnée extraite du fichier de journalisation reçue, la métrique reçue, et la topologie reçue,
- Plongement d'au moins une partie du graphe pour obtenir au moins un vecteur d'état représentant la au moins une partie du graphe plongée.

2. Procédé de représentation selon l'une quelconque des revendications précédentes **caractérisé en ce que** les étapes de réception sont mises en œuvre une pluralité de fois, chaque mise en œuvre étant réalisée pendant une fenêtre de temps de durée prédéterminée, les étapes de constructions de graphe, de plongement du graphe étant réalisées à la fin de chaque fenêtre de temps.

3. Procédé de représentation selon l'une quelconque des revendications précédentes **caractérisé en ce que** le graphe créé comprend :
- des nœuds représentant des utilisateurs, des dispositifs de traitement, des activités et/ou des fichiers de journalisation,
- des arrêtes reliant les nœuds, les arrêtes représentant les liens entre nœuds et étant basées au moins en partie sur la topologie,
- des attributs de nœuds et/ou d'arrêtes représentant les métriques reçues.

4. Procédé de représentation selon l'une quelconque des revendications précédentes **caractérisé en ce que** la topologie reçue est envoyée par un orchestrateur.

5. Procédé de représentation selon l'une quelconque des revendications précédentes **caractérisé en ce que** le plongement d'au moins une partie du graphe est réalisé par un procédé de plongement de graphe choisi parmi DyGCN et MAGNN.

6. Procédé de maintenance d'un système informatique distribué, le système informatique distribué comprenant une pluralité de dispositifs de traitement reliés entre eux selon une topologie prédéfinie, le procédé comprenant au moins les étapes du procédé de représentation selon l'une quelconque des revendications précédentes et en outre une étape de maintenance du système informatique distribué par un procédé d'apprentissage automatique à partir du vecteur d'état.

7. Procédé de maintenance selon la revendication précédente **caractérisé en ce que** l'étape de maintenance du système informatique distribué est réalisée à partir d'une pluralité de vecteurs d'état respectivement obtenus pendant chaque fenêtre de temps de la pluralité de fenêtres de temps.

8. Procédé de maintenance selon l'une quelconque des revendications 6 et 7, **caractérisé en ce que** le procédé d'apprentissage automatique est au moins un procédé parmi :
- un procédé de détection d'anomalie,
- un procédé de prédiction d'incident,
- un procédé d'analyse cause racine.

9. Dispositif de représentation d'un système informatique distribué, le système informatique distribué comprenant une pluralité de dispositifs de traitement reliés entre eux selon une topologie prédéfinie, le dispositif de représentation étant **caractérisé en ce qu'**il comprend :
- Au moins un module de réception, configuré pour mettre en œuvre les étapes de réception du procédé de représentation selon l'une quelconque des revendications 1 à 5,
- Au moins un module de création de graphe, configuré pour mettre en œuvre l'étape de création de graphe du procédé de représentation selon l'une quelconque des revendications 1 à 5,
- Au moins un module de plongement de graphe, configuré pour mettre en œuvre l'étape de plongement de graphe du procédé de représentation selon l'une quelconque des revendications 1 à 5.

10. Dispositif de représentation selon la revendication précédente **caractérisé en ce qu'**il comprend en outre un module de stockage configuré pour stocker le au moins un vecteur d'état issu de l'étape de plongement de graphe, le module de plongement de graphe étant en outre configuré pour envoyer le vecteur d'état au module de stockage.

11. Produit-programme d'ordinateur comprenant des instructions qui, lorsque le programme est exécuté par un ordinateur, conduisent celui-ci à mettre en œuvre les étapes du procédé de représentation selon l'une quelconque des revendications 1 à 5 ou les étapes du procédé de maintenance selon l'une quelconque des revendications 6 à 8.

12. Support d'enregistrement lisible par ordinateur comprenant des instructions qui, lorsqu'elles sont exécutées par un ordinateur, conduisent celui-ci à mettre en œuvre les étapes du procédé de représentation selon l'une quelconque des revendications 1 à 5 ou les étapes du procédé de maintenance selon l'une quelconque des revendications 6 à 8.
